# EUROPEAN PATENT SPECIFICATION

(11) **EP 1 647 672 B1**
(45) Date of publication and mention of the grant of the patent: **31.03.2010**
(21) Application number: 05256379.8
(22) Date of filing: 13.10.2005
(51) Int. Cl.: F01D 5/18, F01D 5/08, F01D 5/14

(54) **Airfoil with impingement cooling of a large fillet**
Schaufel mit prallgekühltem Übergang von grossem Krümmungsradius
Ailette ayant un raccordement à grand rayon de courbure refroidi par impact

(30) Priority: 18.10.2004 US 967557
(43) Date of publication of application: 19.04.2006
(73) Proprietor: United Technologies Corporation, Hartford, CT 06101 (US)
(72) Inventor: Cunha, Frank J., Avon, CT 06001 (US); Albert, Jason E., West Hartford, CT 06119 (US); Pietraszkiewicz, Edward F., Southington, CT 06489 (US)
(74) Representative: Leckey, David Herbert

(56) References cited:
- EP-A- 0 302 810
- EP-A- 1 160 418
- EP-A- 1 221 538
- GB-A- 2 384 275
- US-A- 3 628 885
- US-A- 3 867 068
- US-A- 5 634 766

## Description

### Background of the Invention

This invention relates generally to turbine blades, and more particularly, to turbine blades with a large fillet and associated cooling features.

Present turbine blade design configurations include little or no leading edge fillets at the transition between the blade and the associated platform. As a result, several gas path vortices are developed in this region so as to cause hot gases to be trapped in certain areas of the airfoil, thereby resulting in severe distress to those regions.

One way to alleviate the problem is to introduce large fillets that have a substantial radius such that the gas path vortices are substantially eliminated. A large fillet on the other hand, will tend to add metal and therefore mass to the blade. Such an increase in thermal mass in a fluid area would have negative effects in terms of centrifugal loading and thermal stress fatigue and creep. It is therefore desirable to not only substantially increase the fillet radius but also to reduce the mass that is associated with a larger fillet, and to also provide proper cooling for this area.

Turbine blades which incorporate impingement cooling of a leading edge are disclosed in, EP-A-302810, which is the closest prior art and discloses the preamble of claim 1. General prior art is shown in the documents GB-A-2384275, US-A-3628885, US-A-3867068 and EP-A-1221538.

### Summary of the Invention

According to the invention there is provided a gas turbine component as claimed in claim 1.

In accordance with a preferred feature of the invention, the thickness of the relatively large fillet is minimized to reduce its mass the impingement cavity behind the leading edge is extend radially inwardly and curve forwardly behind an substantial conformity with the curve of the fillet.

In accordance with another a preferred feature of the invention, the impingement cavity flattens and widens as it extends towards its radially inner end to thereby provide improved cooling to the fillet.

In accordance with another preferred feature of the invention, the impingement cavity is defined on its one side by an impingement rib having impingement holes that are elongated in cross sectional form.

In accordance with another preferred feature of the invention, the impingement holes near the blade leading edge are orientated with their elongations radially aligned, and those impingement holes adjacent the fillet are aligned with their elongations in the transverse direction.

In the drawings as hereinafter described, preferred and alternate embodiments are depicted; however, various other modifications and alternate constructions can be made thereto without departing from the scope of the invention, as defined by the accompanying claims.

### Brief Description of the Drawings

FIGS. 1A and 1B are schematic illustrations of vortex flow models for turbine blades in accordance with the prior art.
FIG. 2 is a top view of a turbine blade showing the streamlines flowing therearound in accordance with the prior art.
FIG. 3A shows comparisons of gas temperature reductions between large and small fillet blades.
FIG. 3B shows comparisons of adiabatic wall temperatures between large and small fillet blades.
FIGS. 4A and 4B are cutaway views of a large fillet blade in accordance with the present invention.
FIG. 4C is a sectional view as seen along lines CC of Fig. 4B.

### Description of the Preferred Embodiment

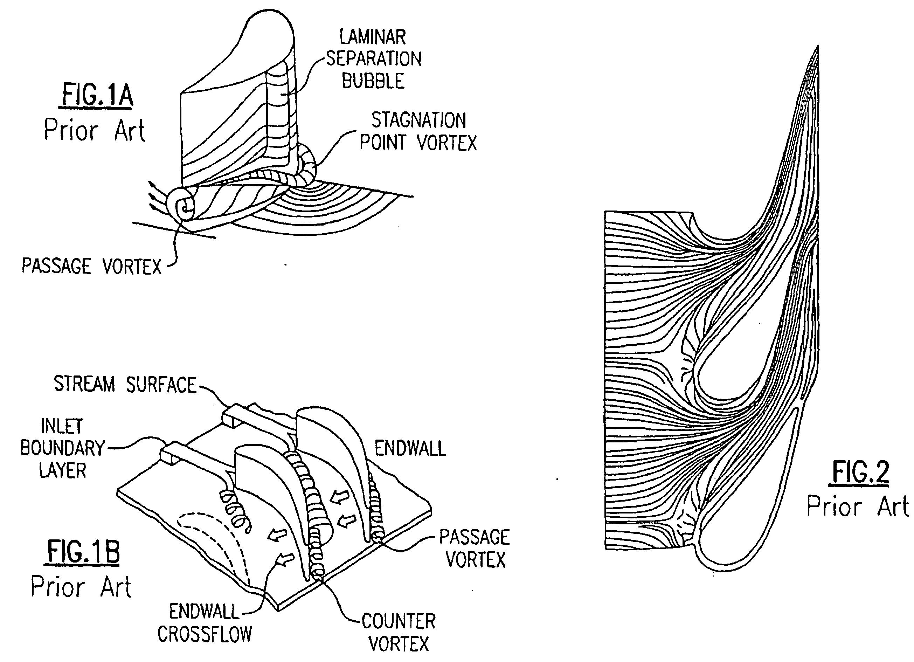

Referring now to Figs. 1A and 1B, there is shown an artist's conception of a vortex structure that results from the flow of hot gases over a turbine blade having no fillet (i.e. with the blade portion intersecting with the platform section at substantially an orthogonal angle). Here, it will be seen, that because of laminar separation that occurs, secondary flow vortices are formed such that hot gases can betrapped on the suction side of the airfoils as shown, and these can then result in severe distress in these regions.

In Fig. 2, there is shown a computational fluid dynamics simulation of the streamlines of gases passing around an airfoil having little or no fillet as discussed hereinabove. Here again, there is evidence of secondary flow vortices that tend to affect the thermal load to the airfoil.

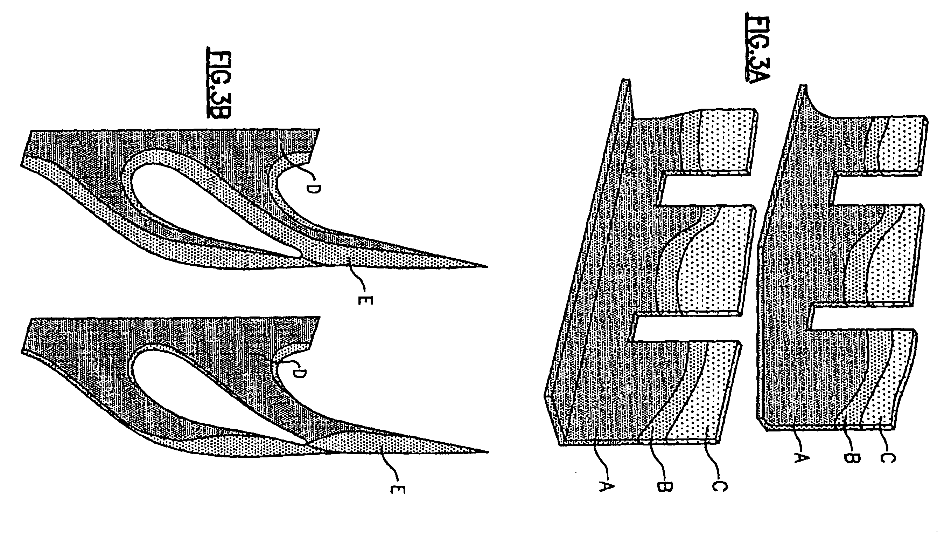

In an effort to address the problems discussed hereinabove, the airfoil was modified to include a leading edge fillet with a substantial radius. For example, present blade design configurations use leading edge fillets to the blade platforms with a radius, or offset, in the range of 0.080 inches (2.03 mm) or less. In accordance with the present design of increased fillet size, a fillet is provided having a radius that may be as high as a quarter of the size of the entire radial span or about 3/8 inches (9.5 mm) or higher. This modification has been found to improve the flow characteristics of the airfoil and to thereby substantially reduce the temperatures in the fillet region. For example, in Fig. 3A, there is shown a color coded indication of temperatures in three gradations, A, B and C for both an airfoil with no fillet (at the bottom) and one with a large fillet (at the top). In each of these, the cooler range of temperatures is shown by the darker colors A at the bottom and the hotter temperature ranges are shown by the lighter colors C at the top. As will be recognized, the gas temperatures flowing over the modified airfoil (i.e. with a fillet) has a substantially greater portion in the cooler zone A than the airfoil without the fillet. This is the result of the fillet tending to suppress the end wall vortices.

Similarly, in Fig. 3B, wherein there is shown a comparison of adiabatic wall temperatures between an airfoil having no fillet (as shown at the left) and one with the fillet (as shown at the right). In each case, the darker portion D is indication of cooler temperature range and the lighter portion E is indicative of a higher temperature range. Again, it will be seen that the adiabatic wall temperatures of the airfoil having a fillet are substantially reduced from those of the airfoil having no fillet.

Although the use of larger fillets successfully addresses the problem of the secondary flow vortices as discussed hereinabove, the use of such large fillets can also introduce other problems associated with the design and use of an airfoil. Generally, it will be understood that the introduction of a larger fillet will also increase the amount of metal that is in the airfoil. This substantial increase in the mass in the area of the fillet could have a negative effect in terms of centrifugal loading and thermal stress, fatigue and creep. The present invention therefore addresses this problem by reducing the mass of the larger fillet blade and providing for various cooling features that have been found effective in cooling the large fillet leading edges.

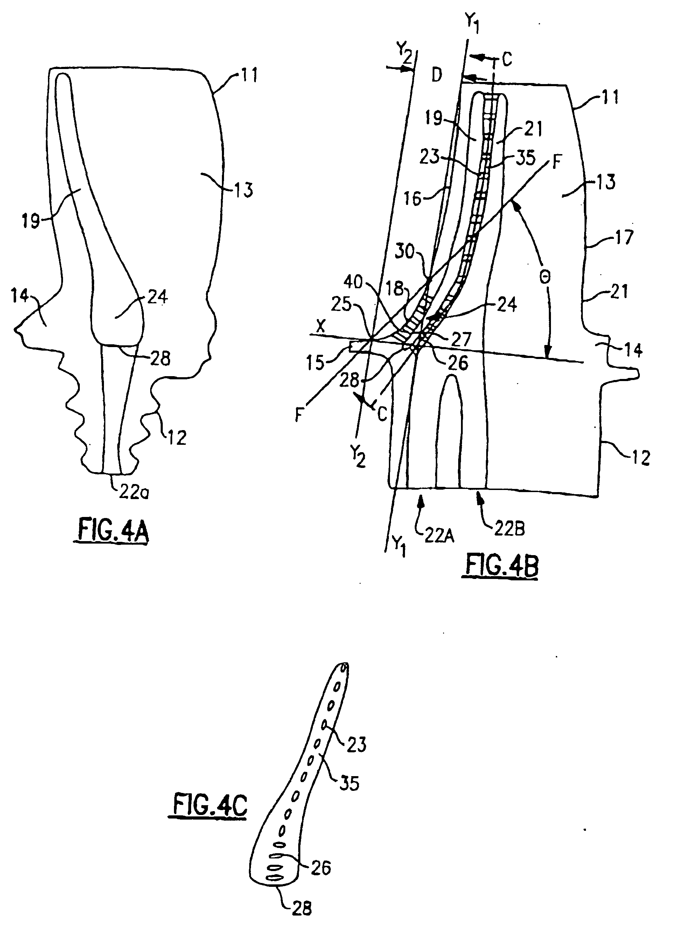

Referring now to Figs. 4A and 4B, wherein a turbine blade 11 is shown in a front view and a side view, respectively, the turbine blade 11 has a fir tree 12 for attaching the blade 11 to a rotating member such as a disk, an airfoil portion 13 and a platform 14 having a leading edge 15 and a trailing edge 20 that define a plane x-x. The airfoil portion 13 has a pressure side (i.e. concave side) and a suction side (i.e. convex side), a leading edge 16 that defines a plane Y₁-Y₁ that is substantially orthogonal to plane x-x and a trailing edge 17. At the point where the leading edge 16 transitions into and is attached to the platform 14, there is a relatively large-radius fillet 18 that extends from a point 25 on the platform 14 to a point 30 on the leading edge 16 as shown. The distance D defines the offset between the plane Y₁-Y₁ and a plane Y₂-Y₂ that is parallel to plane Y₁-Y₁ and passes through point 25. A fillet line F-F extending between points 25 and 30 and forming a fillet angle of θ defines the extent of the fillet 18. In accordance with the present invention the large fillet 18 is defined by the parameters D and θ with the offset D being in the range of 0.080" to 0.375" (2.03 to 9.53 mm) and the fillet angle θ being in the range of 10° to 60°. It is this large radius fillet that overcomes the problems of end wall vortices as discussed hereinabove.

As is conventional in these types of blades, there is provided behind the leading edge wall a leading edge cavity 19, and parallel to that is a coolant supply cavity 21. The coolant supply cavity 21 is supplied with a source of cooling air that flows up through a pair of radial passages 22A and 22B which pass through the fir tree 12. The coolant supply cavity 21 is fluidly connected to the leading edge cavity 19 by a plurality of impingement cooling passages 23. These impingement cooling passages 23 are formed in what eventually becomes an impingement rib 35 during the casting process by the insertion of small ceramic core rods which are subsequently removed to leave the impingement cooling passages 23. Thus, the cooling air passes through the radial passages 22A and 22B and into the coolant supply cavity 21. It then passes through the impingement cooling passages 23 and into the leading edge cavity 19 where it impinges on the inner surface of the leading edge before being discharged to the outside of the blade by way of film holes. In accordance with one aspect of the present invention, the leading edge cavity 19 extends downwardly toward the platform 14 into an expanded fillet cavity 24 directly behind the fillet 18. The coolant supply cavity 21 is fluidly connected to the fillet cavity 24 by impingement holes 26 formed in the lower portion of the impingement rib 35.

In operation, cooling air is introduced into the radial passages 22A and 22B, passes into the supply cavity 21 on the back side of the impingement rib 35 and then a portion of the cooling air passes through the impingement cooling passages 23 to cool the leading edge 16 of the blade and a portion thereof passes through the impingement holes 26 to impinge on the inner surface 27 of the fillet 18 and then flow through film cooling holes 40 formed in the fillet 18.

Considering now some of the features of the present invention, it will be recognized that the radial passage 22A is radially aligned with the impingement holes 26 at the lower portion of the impingement rib 35 such that the cooling air flowing through the radial passage 22A impinges directly on the impingement holes 26 leading to the impingement cavity 24, where it impinges on the fillet inner surface 27, such that effective cooling of the inner wall 27 of the fillet 18 can be accomplished.

Another feature that tends to enhance the cooling function is that of the fillet cavity 24 being wider toward its radially inner end 28 as shown in Fig. 4A, and also flattened towards its radially inner end as shown in Fig. 4B. That is, as the fillet cavity 24 approaches its inner end 28, the distance between the impingement rib 35 and the fillet inner wall 27 decreases so as to place the impingement holes 26 closer to the inner wall 27. By making the fillet cavity 24 as wide as possible, a wider area of the large fillet 18 is cooled by impingement and more metal is removed from the large fillet 18, thereby resulting in less mass, stress and creep damage in the blade and attachment.

Another feature of the present invention is shown in Fig. 4C wherein the impingement cooling passages 23 in the radially outer portion of the impingement rib 35, are elongated in form, with the elongations aligned substantially radially as shown. In the radially inner portion of the impingement ribs 35, however, the impingement holes 26 are elongated in the lateral direction as shown to thereby more effectively cool the full width of the large fillet 18.

The shape of the elongated impingement cooling passages 23 and the impingement holes 26 can be of any generally oval shape such as elliptical or racetrack in form. The limiting factor for how thin and wide the fillet cavity 24 can be made is the geometric constraints of the casting process for the core. A minimum corner radius and draft angle is required for the core features which will dictate a minimum thickness for a given width of the fillet cavity 24.

## Claims

1. A gas turbine engine component (11) comprising:
an attachment (12) for mounting the component to a rotatable disk;
a platform (14) connected to said attachment (12) and extending in a first plane between a leading edge (15) and a trailing edge (20);
an airfoil (13) interconnected to said platform (14) by a fillet (18) extending from a point (25) on said platform (14) first plane to a point (30) on a leading edge (16) of the airfoil (13) extending along a second plane substantially orthogonal to said first plane, a fillet line extending between said points defining an acute angle θ, said fillet (18) having an inner wall surface (27); further comprising
an impingement rib (35) disposed adjacent to said fillet inner wall surface (27) to jointly form a fillet cavity (24) therebetween,
a generally radially extending supply air passage (22A, 22B) formed in said attachment (12) for conducting the flow of cooling air to the rear side of said impingement rib (35), **characterised by** said impingement rib (35) having a plurality of impingement holes (26) formed in the lower portion thereof so as to pass said flow through said plurality of impingement holes (26) and impinge said flow on said fillet inner wall surface (27) at the leading edge (15).

2. A gas turbine engine component as set forth in claim 1 wherein said acute angle is in the range of 10° to 60°.

3. A gas turbine engine component as set forth in claim 1 or 2 wherein the extent of said fillet (18) is defined by an offset distance (D) defined by the distance between said first point (25) in which the fillet (18) intersected with said first plane and said second point (30) in which the fillet (18) intersects with said second plane measured along a plane parallel the said first plane, and further wherein the offset distance is in the range of 0.080" to 0.375" (2.03 to 9.53 mm).

4. A gas turbine engine component as set forth in claim 1, 2 or 3 wherein said supply air passage (22A, 22B) is fluidly connected to a supply air cavity (21) on a rear side of said impingement rib (35).

5. A gas turbine engine component as set forth in claim 4 wherein said supply air cavity (21) is fluidly interconnected to a leading edge cavity (19) by a plurality of impingement cooling passages (23).

6. A gas turbine engine component as set forth in any preceding claim wherein, said fillet (18) curves forwardly as it extends radially inwardly to said platform (14); said fillet inner wall surface (27) curves forwardly as it extends towards said platform (14); and
further wherein said leading edge cavity (19) and said impingement rib (35) are so formed as to curve forwardly as they extend radially inwardly in close proximity to said fillet (18).

7. A gas turbine engine component as set forth in any preceding claim wherein both said airfoil (13) and said fillet (18) have a plurality of film cooling holes for conducting the flow of coolant air to an outer surface thereof.

8. A gas turbine engine component as set forth in any preceding claim wherein said supply air passage (22A, 22B) is generally radially aligned with said plurality of impingement holes (26) so as to impinge thereon.

9. A gas turbine engine component as set forth in any preceding claim wherein said plurality of impingement holes (26) are generally elongated in cross sectional shape.

10. A gas turbine engine component as set forth in claim 9 wherein said elongated shapes are aligned generally transversely to the radial direction.

11. A gas turbine engine component as set forth in claim 10 wherein said impingement cooling passages (23) have cross sectional shapes that are elongated in form.

12. A gas turbine engine component as set forth in claim 11 wherein said elongated impingement cooling passages (23) are generally aligned in a radial direction.

13. A gas turbine engine component as set forth in any preceding claim, wherein said attachment is a fir tree (12).

## Patentansprüche

1. Gasturbinenmaschinenkomponente (11) aufweisend:
eine Befestigung (12) zum Befestigen der Komponente an einer rotierbaren Scheibe;
eine Plattform (14), die mit der Befestigung (12) verbunden ist und sich in einer ersten Ebene zwischen einem vorderen Rand (15) und einem hinteren Rand (20) erstreckt;
ein Strömungsprofil (13), das durch einen Steg (18), der sich von einem Punkt (25) auf einer ersten Ebene der Plattform (14) zu einem Punkt (30) auf einem vorderen Rand (16) des Strömungsprofils (13) erstreckt, mit der Plattform (14) verbunden ist und sich entlang einer zweiten Ebene, die im Wesentlichen orthogonal zu der ersten Ebene ist, erstreckt, wobei eine Steglinie, die sich zwischen den Punkten erstreckt, einen spitzen Winkel (Θ) einschließt und der Steg (18) eine innere Wandfläche (27) hat; zusätzlich aufweisend:
eine Aufprallrippe (35), die neben der inneren Wandfläche (27) des Stegs angeordnet ist, um zusammen einen Steghohlraum (24) dazwischen zu bilden;
eine sich im Wesentlichen in radialer Richtung erstreckende Luftzufuhrpassage (22A, 22B), die in der Befestigung (12) ausgebildet ist, um die Kühlluftströmung zur Rückseite der Aufprallrippe (35) zu führen,
**dadurch gekennzeichnet, dass**
die Aufprallrippe (35) mehrere Aufpralllöcher (26) hat, die in ihrem unteren Bereich ausgebildet sind, sodass die Strömung durch die mehreren Aufpralllöcher (26) strömt und die Strömung am vorderen Rand (15) auf die innere Wandfläche (27) des Stegs aufprallt.

2. Gasturbinenmaschinenkomponente nach Anspruch 1, wobei der spitze Winkel im Bereich von 10° bis 60° liegt.

3. Gasturbinenmaschinenkomponente nach Anspruch 1 oder 2, wobei die Erstreckung des Steges (18) durch eine Offset-Distanz (D) definiert ist, die durch den Abstand zwischen dem ersten Punkt (25), an dem der Steg (18) die erste Ebene schneidet, und dem zweiten Punkt (30), an dem der Steg (18) die zweite Ebene schneidet, gemessen entlang einer Ebene, die parallel zu der ersten Ebene ist, definiert ist und wobei weiterhin die Offset-Distanz im Bereich von 0,080 Zoll bis 0,375 Zoll (2,03 bis 9,53 mm) liegt.

4. Gasturbinenmaschinenkomponente nach einem der Ansprüche 1, 2 oder 3, wobei die Luftzufuhrpassage (22A, 22B) strömungsmäßig mit einem Luftzufuhrhohlraum (21) auf einer Rückseite der Aufprallrippe (35) verbunden ist.

5. Gasturbinenmaschinenkomponente nach Anspruch 4, wobei der Luftzufuhrhohlraum (21) strömungsmäßig durch mehrere Aufprallkühlpassagen (23) mit einem Vorderrandhohlraum (19) verbunden ist.

6. Gasturbinenmaschinenkomponente nach einem der vorangehenden Ansprüche, wobei der Steg (18) sich nach vorne krümmt, während er sich radial nach innen zu der Plattform (14) erstreckt; wobei sich die innere Wandfläche (27) des Stegs nach vorne krümmt, während sie sich in Richtung auf die Plattform (14) erstreckt; und
wobei weiterhin der Vorderrandhohlraum (19) und die Aufprallrippe (35) so ausgebildet sind, dass sie sich nach vorne krümmen, während sie sich in enger Nähe zu dem Steg (18) radial nach innen erstrecken.

7. Gasturbinenmaschinenkomponente nach einem der vorangehenden Ansprüche, wobei sowohl das Strömungsprofil (13) als auch der Steg (18) mehrere Filmkühlöffnungen haben, um die Kühlluftströmung zu einer äußeren Fläche davon zu leiten.

8. Gasturbinenmaschinenkomponente nach einem der vorangehenden Ansprüche, wobei die Luftversorgungpassage (22A, 22B) im Wesentlichen radial mit den mehreren Aufprallöffnungen (26) ausgerichtet ist, um darauf aufzuprallen.

9. Gasturbinenmaschinenkomponente nach einem der vorangehenden Ansprüche, wobei die mehreren Aufprallöffnungen (26) in der Querschnittform im Wesentlichen gestreckt sind.

10. Gasturbineninaschinenkomponente nach Anspruch 9, wobei die gestreckten Formen im Wesentlichen quer zur Radialrichtung ausgerichtet sind.

11. Gasturbinenmaschinenkomponente nach Anspruch 10, wobei die Aufprallkühlpassagen (23) Querschnittformen haben, die in der Form gestreckt sind.

12. Gasturbinenmaschinenkomponente nach Anspruch 11, wobei die gestreckten Aufprallkühlpassagen (23) im Wesentlichen in radialer Richtung ausgerichtet sind.

13. Gasturbinenmaschinenkomponente nach einem der vorangehenden Ansprüche, wobei die Befestigung vom Tannenbaum-Typ (12) ist.

## Revendications

1. Composant (11) de moteur à turbine à gaz comportant :
une fixation (12) destinée à monter le composant sur un disque tournant ;
une plate-forme (14) reliée à ladite fixation (12) et s'étendant dans un premier plan entre un bord d'attaque (15) et un bord de fuite (20) ;
un profil aérodynamique (13) interconnecté à ladite plate-forme (14) par un arrondi (18) s'étendant d'un point (25) du premier plan de ladite plate-forme (14) à un point (30) d'un bord d'attaque (16) du profil aérodynamique (13) s'étendant le long d'un deuxième plan sensiblement orthogonal audit premier plan, une ligne d'arrondi s'étendant entre lesdits points définissant un angle aigu θ, ledit arrondi (18) présentant une surface (27) de paroi intérieure ; comportant en outre
une nervure (35) d'impact disposée au voisinage de ladite surface (27) de paroi intérieure d'arrondi pour former conjointement une cavité (24) d'arrondi entre celles-ci,
un passage (22A, 22B) d'air d'alimentation s'étendant de façon généralement radiale, formé dans ladite fixation (12) afin de conduire l'écoulement d'air de refroidissement jusqu'à la face arrière de ladite nervure (35) d'impact, **caractérisé en ce que** ladite nervure (35) d'impact comporte une pluralité de trous (26) d'impact formés dans sa partie inférieure de façon à faire passer ledit écoulement à travers ladite pluralité de trous (26) d'impact et à faire porter ledit écoulement sur ladite surface (27) de paroi intérieure d'arrondi au niveau du bord d'attaque (15).

2. Composant de moteur à turbine à gaz selon la revendication 1, ledit angle aigu se situant dans la plage de 10° à 60°.

3. Composant de moteur à turbine à gaz selon la revendication 1 ou 2, l'étendue dudit arrondi (18) étant définie par une distance (D) de décalage définie par la distance entre ledit premier point (25) où l'arrondi (18) croise ledit premier plan et ledit deuxième point (30) où l'arrondi (18) croise ledit deuxième plan, mesurée le long d'un plan parallèle audit premier plan, et la distance de décalage se situant en outre dans la plage de 0,080" à 0,375" (2,03 à 9,53 mm).

4. Composant de moteur à turbine à gaz selon la revendication 1, 2 ou 3, ledit passage (22A, 22B) d'air d'alimentation étant relié fluidiquement à une cavité (21) d'air d'alimentation située sur une face arrière de ladite nervure (35) d'impact.

5. Composant de moteur à turbine à gaz selon la revendication 4, ladite cavité (21) d'air d'alimentation étant interconnectée fluidiquement à une cavité (19) de bord d'attaque par une pluralité de passages (23) de refroidissement par impact.

6. Composant de moteur à turbine à gaz selon l'une quelconque des revendications précédentes, ledit arrondi (18) s'incurvant vers l'avant à mesure qu'il s'étend radialement vers l'intérieur jusqu'à ladite plate-forme (14) ; ladite surface (27) de paroi intérieure d'arrondi s'incurvant vers l'avant à mesure qu'elle s'étend vers ladite plate-forme (14) ; et
ladite cavité (19) de bord d'attaque et ladite nervure (35) d'impact étant en outre formées de telle sorte qu'elles s'incurvent vers l'avant à mesure qu'elles s'étendent radialement vers l'intérieur à proximité immédiate dudit arrondi (18).

7. Composant de moteur à turbine à gaz selon l'une quelconque des revendications précédentes, ledit profil aérodynamique (13) et ledit arrondi (18) étant tous deux dotés d'une pluralité de trous de refroidissement par film destinés à conduire l'écoulement d'air de refroidissement jusqu'à une surface extérieure de ceux-ci.

8. Composant de moteur à turbine à gaz selon l'une quelconque des revendications précédentes, ledit passage (22A, 22B) d'air d'alimentation étant aligné de façon généralement radiale avec ladite pluralité de trous (26) d'impact de façon à porter sur ceux-ci.

9. Composant de moteur à turbine à gaz selon l'une quelconque des revendications précédentes, ladite pluralité de trous (26) d'impact étant de forme généralement allongée en section droite.

10. Composant de moteur à turbine à gaz selon la revendication 9, lesdites formes allongées étant alignées de façon généralement transversale par rapport à la direction radiale.

11. Composant de moteur à turbine à gaz selon la revendication 10, lesdits passages (23) de refroidissement par impact présentant des formes en section droite d'allure allongée.

12. Composant de moteur à turbine à gaz selon la revendication 11, lesdits passages allongés (23) de refroidissement par impact étant généralement alignés dans une direction radiale.

13. Composant de moteur à turbine à gaz selon l'une quelconque des revendications précédentes, ladite fixation étant un sapin (12).
